# EUROPEAN PATENT SPECIFICATION

(11) **EP 1 161 827 B1**
(45) Date of publication and mention of the grant of the patent: **23.11.2005**
(21) Application number: 00908137.3
(22) Date of filing: 01.03.2000
(51) Int. Cl.: H04M 7/00, H04M 15/00, H04L 12/14

(54) **ARRANGEMENT RELATED TO A CALL PROCEDURE**
ANORDNUNG FÜR EIN ANRUFVERFAHREN
ARRANGEMENT RELATIF A UNE PROCEDURE D'APPEL

(30) Priority: 02.03.1999 NO 991021
(43) Date of publication of application: 12.12.2001
(73) Proprietor: TELEFONAKTIEBOLAGET LM ERICSSON (publ), 164 83 Stockholm (SE)
(72) Inventor: CORNELIUSSEN, Knut, Snorre, Bach, N-0775 Oslo (NO); RAESTAD, Atle, N-1777 Halden (NO)
(74) Representative: HOFFMANN EITLE
(86) International application number: PCT/NO2000/000073
(87) International publication number: WO 2000/052915

(56) References cited:
- EP-A- 0 866 596
- EP-A- 0 928 095
- WO-A-98/19448
- WO-A-98/26543
- WO-A-99/27697
- ERIKSSON M: "Internet directory services with Click-to-Talk" ERICSSON REVIEW, vol. 75, no. 3, 1998, pages 118-125, XP002901176 SWEDEN

## Description

### Field of the invention

The present invention relates to an arrangement related to a call procedure, wherein the receiver of the call should be charged for the call and not the caller, especially in connection with users/endpoints that have been registered in a gatekeeper as subscribers to such service, for thereby allowing said gateway to set up H.323 calls therebetween.

In other words, the invention has to do with calling numbers where the receiver of the call shall be charged for the call and not the caller, in an H.323 environment.

### TECHNICAL BACKGROUND

### The Problem Area

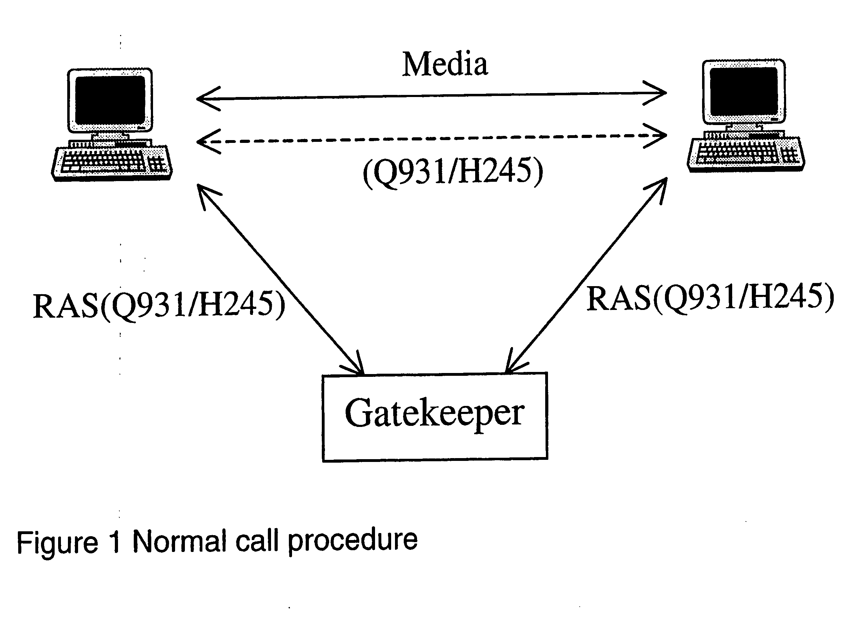

According to the H.323 standard you have to register in a gatekeeper before you can set up a call through the gatekeeper. The gatekeeper decides who are allowed to register. This will typically be everyone that has a subscription for this service. Then the users/endpoints with subscription are allowed to register and setup H.323 calls between each other. Usually the caller is the one that is charged for the call. A normal call would be like what appears on Figure 1.

There is a need for a simple way to call someone where the receiver is charged for the call. And the caller shouldn't need to be a subscriber to the service to call these free of charge numbers.

EP-A-0 928 095 describes a method for establishing a special service call connection over the Internet by mapping a dialled special service number to a destination number and an IP address of a terminating ITS (Internet Telephony Server) serving the destination number and routing the call from an originating ITS to the terminating ITS to complete the call. However, EP-A-0 928 095 does not explicitly explain how to enable an unregistered subscriber to make a reverse-charge call.

WO 98/26543 discloses a gateway system for coupling a telephone network to the Internet. However, it does not include anything about reverse-charge call or making calls without being a subscriber.

### Objects of the invention

A first object of the present invention is to provide an arrangement by which a caller does not have to be a subscriber to the service in order to call such free of charge numbers.

Another object of the present invention is to provide an arrangement whereby it is avoided that the gatekeeper should handle all the signalling by itself, i.e. having to use some proprietary methods for verification.

Still another object of the present invention is to provide an arrangement whereby this type of service could be effected in a very user-friendly manner and primarily by the use of existing hardware.

### Brief summary of the invention

The above objects are achieved in an arrangement as stated in the preamble, which according to the present invention is characterized in that the arrangement includes a proxy and means for communicating with the proxy, said proxy being provided with adaption means for registering callers who are not subscribers to the service and for connecting said callers to a free of charge call.

Most appropriately, said means for communicating with a proxy may be initiated by a click on a web page.

In other words, the present solution is to the fact that a simple click on a web page will connect to a proxy that sends registration for you and assures that you are indeed calling a free of charge number.

If the user is calling a number that is not free of charge, the call will not be set up.

Further, the invention will avoid that the gatekeeper should handle all the signalling by itself, which would possibly include the use of some proprietary methods for verification.

Since the gatekeeper is a critical resource in an H.323 environment the present invention allows for no substantial changes therein.

Further features and advantages of the present invention will appear from the following description taken in conjunction with the enclosed drawings, as well as from the enclosed patent claims.

### Brief disclosure of the drawings

Figure 1 is a schematically layout illustrating how a normal call is set up in relation to a gatekeeper.
Figure 2 is a schematically layout including the major elements necessary for bringing the present invention into practice, the embodiment here including a proxy adapted to handle RAS signalling towards the gatekeeper.

### Detailed description of embodiments

Figure 1 illustrates how a normal prior art call is set up in an H.323 environment, wherein you have to register in a gatekeeper before you can set up a call through the gatekeeper.

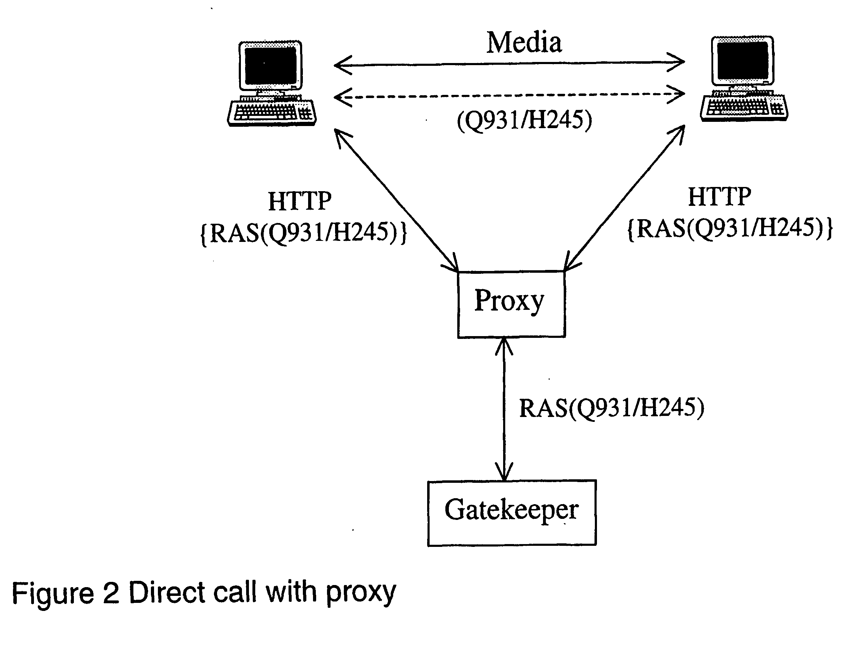

In Figure 2 there is illustrated how the invention in a simple way can let a user call someone where the receiver is charged for the call, the caller not having to be a subscriber to the service to call these free of charge numbers.

The basic idea is to use a RAS proxy to handle the RAS signalling towards the gatekeeper. But this can be extended to let the proxy do the Q931 and H245 signalling also, as shown in Figure 2.

A major issue in this solution is that it is not the end-user that is verified, but it is the application itself. This means that the task for the gatekeeper system is to verify that the originator of the call is done from a certain application, and not from a specific user. This is important when considering security and billing for the call.

On the client side there may be used a signed applet, or an equivalent application type, in a web page, or any similar application environment. This will ensure the end-user with information about who made this service (the service provider), and that nobody has tampered with the applet since it was signed by the service provider.

The applet will send an http request to the proxy with information about which number a particular user wants to call. To verify that this is a free of charge number the proxy has two alternatives.

One way is to keep a local list over all numbers that are free of charge, and check the called number with this list.

The other way is to let the applet encrypt the message with a private key, and then the proxy will use the applets public key to decrypt it. It should be understood that more advanced public/private key encrypt schemes can also be used.

The encryption should be done before compiling the applet, since only the number you want to call has to be encrypted, and that number is well know for the service provider before compiling the applet. This ensures that even if someone is trying to decompile the applet to break the security to the system, they will only get an encrypted message that is useless for them. Since the encryption is not done in the applet itself it would be useless for people trying to misuse this service. For the proxy this will verify that the applet calls a number that the service provider has declared to be a free of charge number.

For further security issues one can use an SSL connection between the applet and proxy. Instead of applets it'is also possible to use servlets, or just simple HTML web pages, but then the end-user will not get secure information about who made this service.

The proxy will convert the requests it receives on http to real RAS messages (or Q931/H245) and communicate with the gatekeeper. This communication will allow the endpoint to setup the call through the gatekeeper. If the gatekeeper demands user verification beyond what is provided by the H323 standard, the proxy should also provide this. This means that there are no changes in the gatekeeper to allow this service.

### Advantages

There is no need for changes in the gatekeeper, which was that this invention could be used in an environment that is fully H.323 compliant, requiring no proprietary signalling.

### Broadening

The gatekeeper could handle all the signalling and verifications by itself. This means that the solution described in this patent application could just as well be placed inside the Gatekeeper. The advantage of this is that it would be one system that would handle all the signalling and processing. The disadvantage is that because the real-time requirements for the gatekeeper is very high, then putting all the functionality together would slow down the system.

### Definitions

- H.323 standard -: Provides a foundation for audio, video and data communications across Internet Protocol (IP) based networks, including the Internet.
- RAS -: Registration, Admission and Status. RAS signalling performs registration, admission, bandwidth changes, status and disengage procedures between endpoints and gatekeepers.
- Q.931 -: call signalling protocol for setup and termination of calls.
- H. 245 -: Control protocol for multimedia communication.
- Gatekeeper -: A server that translates user names into physical addresses for H.323 conferencing. It can also be used to provide call authorisation and accounting information.
- Applet -: A program designed to be executed from within another application. Unlike an application, applets cannot be executed directly from the operating system.
- Servlet -: An applet that runs on a server. The term usually refers to a Java applet that runs within a Web server environment. This is analogous to a Java applet that runs within a Web browser environment.
- World Wide Web -: An Internet facility that links documents locally and remotely. The Web document is called a Web page and links in the page to let users jump from page to page (hypertext) whether the pages are stored on the same server or on servers around the world. The pages are accessed and read via a Web browser such as Netscape Navigator or Internet Explorer.
- Http -: HyperText Transport Protocol. The communications protocol used to connect to servers on the World Wide Web.
- Web page -: A page in a World Wide Web document.
- SSL -: Secure Sockets Layer. The leading security protocol on the Internet.
- Proxy server -: Also called a proxy or application level gateway, it is an application that breaks the connection between sender and receiver. All input is forwarded out a different port, closing a straight path between two networks and preventing a hacker from obtaining internal addresses and details of a private network.

### References

[1] ITU-T Recommendation H.323 (1998), "Packet-based multimedia communication systems".

## Claims

1. Arrangement for a call procedure, in connection with a service in which a receiver of a call shall be charged for the call and not a caller, a number of users/endpoints is registered in a gatekeeper (4) as subscribers to such service, and said gatekeeper is adapted to set up H.323 calls between said users/endpoints,
**characterized in that** the arrangement includes a proxy (7) and means for communicating with the proxy (7), said proxy being provided with adaption means for registering callers who are not subscribers to the service and for connecting said callers to a free of charge call.

2. Arrangement as claimed in claim 1,
**chacterized in** that said means for communicating with a proxy (7) is initiated by a click on a web page.

3. Arrangement as claimed in claim 1 or 2,
**chacterized in** that said means for communicating with a proxy (7) is embedded in an RAS proxy (7), which is adapted to handle RAS signalling (8) towards the gatekeeper (4) in question, said RAS proxy (7) being extended to also handle Q931 and H245 signalling.

4. Arrangement as claimed in any of the claims 1-3,
**chacterized in** that said adaption means in the proxy (7) is adapted to communication an application of the service to the gatekeeper (4), which upon verification of such an application enables setup of such free of charge calls.

5. Arrangement as claimed in any of the preceding claims, **characterized in that** a said user is provided with a signed applet, or an equivalent application type, on a web page, or any similar application environment.

6. Arrangement as claimed in claim 5,
**chacterized in** that said applet is signed by the service provider, and that the applet will send an HTTP request (5,6) to the proxy (7) with information about which numbers a particular user wants to call.

7. Arrangement as claimed in any of the preceding claims,
**chacterized in** that said proxy (7) comprises a local list over all numbers that are free of charge, and comprises means for checking the called number with this list.

8. Arrangement as claimed in any of the preceding claims,
**chacterized in** that said applet comprises means for letting the applet encrypt a message with a private key, for thereby letting the proxy (7) use the applet public key for necessary decryption, or possibly using a more advanced public/private key encrypt scheme or said encryption.

9. Arrangement as claimed in claim 8,
**chacterized in** that said encryption is made before the compilation of the applet for thereby increasing the security against decompilation of the applet.

10. Arrangement as claimed in claim 9,
**characterized in that** the encryption is not done in the applet itself, the proxy (7) thereby being adapted to verify that the applet calls a number that the service provider has declared to be a free of charge number.

11. Arrangement as claimed in any of the preceding claims,
**chacterized in** that there is provided an SSL connection between the applet and proxy (7).

12. Arrangement as claimed in any of the preceding claims,
**chacterized in** that instead of applets there are used servlets, or just simple HTML web pages with security means involved therein.

13. Arrangement as claimed in claim 3, **characterized in that** the proxy (7) is adapted to convert requests received on http into real RAS (8) messages and communicate with the gatekeeper (4), this communication enabling the endpoint to setup the call through the gatekeeper (4) .

## Patentansprüche

1. Anordnung für einen Anruf- bzw. Verbindungsvorgang im Zusammenhang mit einem Dienst, bei dem ein Empfänger eines Anrufs für den Anruf belastet wird und nicht ein Anrufer, wobei eine Nummer eines Benutzers/Endpunkts in einem Gatekeeper bzw. Adress-Controller (4) als Teilnehmer für diesen Dienst registriert ist und der Gatekeeper dazu angepasst ist, H.323 Anrufe zwischen den Benutzern/ Endpunkten aufzubauen,
**dadurch gekennzeichnet, dass** die Anordnung einen Proxy bzw. Proxyserver (7) und Mittel zur Datenübertragung mit dem Proxy (7) umfasst, wobei der Proxy mit Anpassungsmitteln zum Registrieren von Anrufern, die keine Teilnehmer des Dienstes sind, und zum Verbinden der Anrufer für einen gebührenfreien Anruf ausgestattet ist.

2. Anordnung nach Anspruch 1, **dadurch gekennzeichnet, dass** das Mittel zur Datenübertragung mit einem Proxy (7) durch einen Klick auf einer Web-Seite initiiert wird.

3. Anordnung nach den Ansprüchen 1 oder 2, **dadurch gekennzeichnet, dass** das Mittel zur Datenübertragung mit einem Proxy (7) eingebettet ist in einen RAS-Proxy (7), der dazu angepasst ist, RAS-Signalisierungen (8) zu dem in Rede stehenden Gatekepper (4) abzuwickeln, wobei der RAS-Proxy (7) erweitert ist, um auch Q931-und H245-Signalisierungen abzuwickeln.

4. Anordnung nach einem der Ansprüche 1 bis 3, **dadurch gekennzeichnet, dass** das Anpassungsmittel in dem Proxy (7) dazu angepasst ist, eine Anwendung des Dienstes zu dem Gatekeeper (4), der aufgrund der Verifizierung einer derartigen Anwendung den Aufbau derartiger gebührenfreier Anrufe ermöglicht, zu übertragen.

5. Anordnung nach einem der vorhergehenden Ansprüche, **dadurch gekennzeichnet, dass** einer der Nutzer mit einem signierten Applet oder einem äquivalenten Anwendungstyp, auf einer Web-Seite oder einer ähnlichen Anwendungsumgebung, ausgestattet ist.

6. Anordnung nach Anspruch 5, **dadurch gekennzeichnet, dass** das Applet durch den Dienstanbieter signiert ist, und dass das Applet eine HTTP-Anforderung (5, 6) mit Information darüber, welche Nummern ein bestimmter Benutzer anrufen möchte, zu dem Proxy (7) senden wird.

7. Anordnung nach einem der vorhergehenden Ansprüche, **dadurch gekennzeichnet, dass** der Proxy (7) eine lokale Liste mit allen Nummern, die gebührenfrei sind und Mittel zum Abgleichen der angerufenen Nummern mit dieser Liste umfasst.

8. Anordnung nach einem der vorhergehenden Ansprüche, **dadurch gekennzeichnet, dass** das Applet Mittel umfasst zum Ermöglichen, dass das Applet eine Nachricht mit einem persönlichen Schlüssel verschlüsselt und **dadurch** den Proxy (7) den allgemein bekannten Schlüssel des Applets für die notwendige Entschlüsselung verwenden lässt, oder möglicherweise ein weiter entwickeltes Programm für die Verschlüsselung persönlicher/allgemeiner Schlüssel oder die Entschlüsselung verwendet.

9. Anordnung nach Anspruch 8, **dadurch gekennzeichnet, dass** die Entschlüsselung vor der Kompilierung des Applets ausgeführt wird, um **dadurch** die Sicherheit bezüglich Dekompilierung des Applets zu erhöhen.

10. Anordnung nach Anspruch 9, **dadurch gekennzeichnet, dass** die Verschlüsselung nicht in dem Applet selbst ausgeführt wird, wobei der Proxy (7) dazu angepasst ist, zu verifizieren, dass das Applet eine Nummer anruft, die der Dienstanbieter als eine gebührenfreie Nummer deklariert hat.

11. Anordnung nach einem der vorhergehenden Ansprüche, **dadurch gekennzeichnet, dass** zwischen dem Applet und dem Proxy (7) eine SSL-Verbindung bereitgestellt wird.

12. Anordnung nach einem der vorhergehenden Ansprüche, **dadurch gekennzeichnet, dass** anstelle von Applets Servlets oder einfach simple HTML-Web-Seiten mit darin eingebundenen Sicherheitsmitteln verwendet werden.

13. Anordnung nach Anspruch 3, **dadurch gekennzeichnet, dass** der Proxy (7) dazu angepasst ist, in HTTP empfangene Anfragen in reale RAS (8) Nachrichten umzuwandeln und mit dem Gatekeeper (4) zu kommunizieren, wobei diese Kommunikation den Endpunkt dazu in die Lage versetzt, den Anruf durch den Gatekeeper (4) aufzubauen.

## Revendications

1. Système pour une procédure d'appel, en relation avec un service dans lequel le destinataire d'un appel sera facturé pour l'appel et pas l'appelant, un certain nombre d'utilisateurs / points d'extrémité sont enregistrés dans un portier (4) comme des abonnés à un tel service, et ledit portier est conçu pour établir des appels H.323 entre lesdits utilisateurs / points d'extrémité,
**caractérisé en ce que** le système comprend un mandataire (7) et un moyen pour communiquer avec le mandataire (7), ledit mandataire étant muni d'un moyen d'adaptation pour enregistrer des appelants qui ne sont pas des abonnés au service et pour relier lesdits appelants à un appel gratuit.

2. Système selon la revendication 1,
**caractérisé en ce que** ledit moyen pour communiquer avec un mandataire (7) est amorcé par un clic sur une page Web.

3. Système selon la revendication 1 ou 2,
**caractérisé en ce que** ledit moyen pour communiquer avec un mandataire (7) est incorporé dans un mandataire RAS (service d'accès distant) (7), qui est conçu pour gérer une signalisation RAS (8) vers le portier (4) en question, ledit mandataire RAS (7) étant étendu pour gérer également des signalisations H245 et Q931.

4. Système selon l'une quelconque des revendications 1 à 3,
**caractérisé en ce que** ledit moyen d'adaptation dans le mandataire (7) est conçu pour communiquer une application du service au portier (4), sur quoi la vérification d'une telle application permet d'établir de tels appels gratuits.

5. Système selon l'une quelconque des revendications précédentes,
**caractérisé en ce qu'**un dit utilisateur est muni d'un applet signé, ou d'un type équivalent d'application, sur une page Web, ou n'importe quel environnement d'application similaire.

6. Système selon la revendication 5,
**caractérisé en ce que** ledit applet est signé par le fournisseur de service, et que l'applet va envoyer une demande HTTP (5, 6) au mandataire (7) avec des informations concernant les numéros qu'un utilisateur particulier souhaite appeler.

7. Système selon l'une quelconque des revendications précédentes,
**caractérisé en ce que** ledit mandataire (7) comprend une liste locale de tous les numéros qui sont gratuits, et comprend un moyen pour vérifier le numéro appelé avec cette liste.

8. Système selon l'une quelconque des revendications précédentes,
**caractérisé en ce que** ledit applet comprend un moyen pour laisser l'applet chiffrer un message avec une clé privée, pour laisser de ce fait le mandataire (7) utiliser la clé publique de l'applet pour le déchiffrage nécessaire, ou pour utiliser probablement un système de chiffrage par clé publique / privée plus avancé ou ledit chiffrage.

9. Système selon la revendication 8,
**caractérisé en ce que** ledit chiffrage est effectué avant la compilation de l'applet pour augmenter de ce fait la sécurité contre une décompilation de l'applet.

10. Système selon la revendication 9,
**caractérisé en ce que** le chiffrage n'est pas effectué dans l'applet lui-même, le mandataire (7) étant de ce fait conçu pour vérifier que l'applet appelle un numéro que le fournisseur de service a déclaré comme étant un numéro gratuit.

11. Système selon l'une quelconque des revendications précédentes,
**caractérisé en ce qu'**il y a une connexion SSL entre l'applet et le mandataire (7).

12. Système selon l'une quelconque des revendications précédentes,
**caractérisé en ce qu'**au lieu d'applets des servlets sont utilisés, ou juste de simples pages Web HTML avec un moyen de sécurité impliqué en leur sein.

13. Système selon la revendication 3,
**caractérisé en ce que** le mandataire (7) est conçu pour transformer des demandes reçues sur le protocole http en messages RAS réels (8) et pour communiquer avec le portier (4), cette communication permettant au point d'extrémité d'établir l'appel par l'intermédiaire du portier (4).
